# EUROPEAN PATENT APPLICATION

(11) **EP 4 008 452 A1**
(43) Date of publication of application: **08.06.2022**
(21) Application number: 20020581.3
(22) Date of filing: 02.12.2020
(51) Int. Cl.: B22F 1/00, B33Y 40/10

(54) **METHOD OF PROCESSING POWDER**

(71) Applicant: Linde GmbH, Linde Engineering, 82049 Pullach (DE)
(72) Inventor: Scholz, Jürgen, 81379 München (DE); Fieret, Jacob, Basingstoke, RG24 9NY (GB); Hibbitt, Ian, Hulland, Derbyshire DE6 3 FJ (GB); Graydon, Glen, Llangennech, Llanelli SA14 8YE (GB); Coroado, Julio, NN9 5EN Finedon Wellingborough (GB)
(74) Representative: Gellner, Bernd

(57) **Abstract**

The present invention relates to a method of processing powders to dissociate stuck-together particles without altering the chemical composition of the powder. In particular, the method relatres to removal of small particles, often referred to as sattelites, stuck to the surface of larger particles. The powder to be processed is submerged in a cryogenic liquid, and ultrasound waves are transmitted to the powder via the cryogenic liquid to dissociate the stuck-together particles.

## Description

### INTRODUCTION

The present invention relates to a method of processing powder to dissociate stuck-together particles of powder. In particular, but not exclusively, the method relates to a method of processing metal powders for use in additive manufacturing processes.

Metal powders are often produced by a process of gas atomisation, in which a stream of molten metal is distrupted by one or more jets of high-pressure gas. The liquid metal forms a plurality of spherical droplets, which solidify before they come into conact with a solid surface, thereby forming a powder comprising spherical particles. To provide optimal performance in additive manufacturing operations, it is desirable that the particles in the powder are as close as possible to spherical, and that they have a narrow size distribution. This facilitates good packaging of the powder and allows the powder to flow well. A problem that is frequently observed during atomisation is formation of "sattelites" on the surface of powder particles. Such sattelites are smaller particles that adhere to the surfaces of larger particles. Typically, the diameter of the satellite particle may be in the range of 1-20% of the larger particle to which it is adhered.

Removal of satellites has hitherto been difficult without exposing the powder to water, which may alter the chemical composition of the powder.

It is an object of the present invention to at least mitigate the above problems.

### SUMMARY OF THE INVENTION

According to an aspect of the present invention there is provided a method of processing a powder to dissociate stuck-together particles of powder, the method comprising:
submerging the powder in a cryogenic liquid; and
transmitting ultrasound to the powder via the cryogenic liquid, thereby dissociating at least some of the stuck-together particles.

Advantageously, this allows the dissociation of stuck-together particles to be performed without exposing the powder to water, oxygen, or another medium that might react with the powder and change its chemical composition.

Within the scope of the present invention ultrasound can be sound waves with frequencies higher than the upper audible limit of human hearing. This limit is approximately from 15 kHz (kilohertz) to 20 kHz (20,000 hertz). Corresponding ultrasound devices operate with frequencies from 15 kHz or 16 kHz or 17 kHz or 18 kHz or 19 kHz or 20 kHz up to several gigahertz.

The powder may be a metal powder. For example, the powder may be iron, titanium, nickel, magnesium, aluminium, copper, tungsten, molybdenum, silver, niobium, tantalum, or an alloy containing one or more of the above-mentioned metals. It will be understood that it is perferable to select a liquid cryogen that is inert with respect to the powder to be processed. For example, in an embodiment in which the powder is titanium or an alloy thereof, liquid argon may be a suitable choice of cryogen.

In an embodiment, the method further comprises the steps of placing the metal powder into a container; submerging the container in the liquid cryogen within an ultrasonic cleaning device; and running the ultrasonic device to transmit ultrasound to the powder.

Optionally, the method takes place within a sealed box, wherein the method further comprises the step of purging the sealed box with an inert gas.

In an embodiment, the cryogenic liquid and inert gas are argon. In another embodiment, the cryogenic liquid and inert gas are nitrogen. In another embodiment, the cryogenic liquid and the gas are different, for example one may be argon and the other nitrogen.

In an embodiment, said metal powder is any one of iron, titanium, nickel, magnesium, aluminium, copper, tungsten, molybdenum, silver, niobium, tantalum, or alloys thereof.

In an embodiment, the cryogenic liquid is maintained below its boiling temperature during the step of transmitting ultrasound to the powder. Preferably, the cryogenic liquid is maintained approximately 10K below its boiling temperature. In an embodiment in which the liquid cryogen is liquid argon, the temperature may be maintained approximately 10K below the boiling temperature by providing a cooling jacket around the dewar in which the liquid argon is contained, which may be filled with liquid nitrogen. As the boiling temperature of nitrogen is approximately 10K lower than that of argon, this cooling jacket will maintain the argon approximately 10K below its boiling temperature. Alternatively, the method may take place at increased pressure, which will lead to a corresponsing increase in the boiling temperature.

In an embodiment, the method further comprises the step of controlling an oxygen level in the ultrasonic device. Preferably, the oxygen level is maintained at less than 4%, more preferably at less than 1%. Advantageously, maintaining a low oxygen concentration ensures that oxidation of the powder surface does not occur, and also reduces or eliminates the risk of a "dust explosion" should any of the powder become airbourne.

In an embodiment, the step of removing the cryogenic liquid comprises evaporation at room temperature.

### BRIEF DESCRIPTION OF THE DRAWINGS

The invention is explained below with the aid of an embodiment shown in the drawings. The drawing shows in:
Figure 1 a rough schematic view of a system for gas atomisation of a stream of molten metal.
Figure 2 a rough cross-sectional view of a system for processing a powder to dissociate stuck-together particles in an embodiment of the present invention.
Figure 3 a flow chart illustrating a method of processing powder in an embodiment of the present invention.

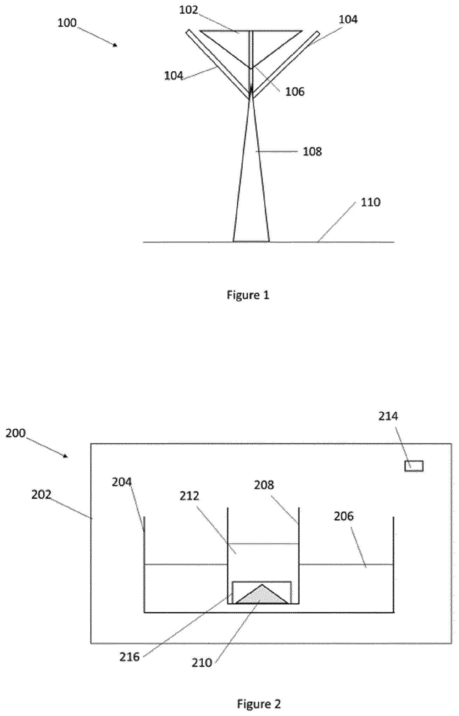

Figure 1 shows a system 100 for atomisation of molten metal using jets of gas 104. The system comprises a nozzle 102 through which a stream of molten metal 106 passes. A plurality of high-pressure jets of gas 104 are directed towards the stream of molten metal 106. The jets of gas impact on the stream of molten metal 106, and cause it to break into a stream of droplets of metal 108. These droplets of metal slowly solidify as they fall to the bottom of the container 110. Because the droplets solidify relatively slowly, they generally have a spherical shape. However, in some cases droplets can stick together, which causes the undesirable "satteliting" phenomenon described above.

Figure 2 shows a cross-sectional view through a system 200 for processing powder 210 to dissociate stuck-together particles of powder. Although the system and its use are described with respect to an embodiment in which the powder is a metal powder for use in additive manufacturing processes, it will be understood that the invention could also be used to dissociate stuck-together particles of non-metal powders, and/or for powders intended for applications other than additive manufacture.

The system 200 comprises an ultrasonic cleaning device 204, which is housed within a sealed box 202. As will be well understood by the skilled person, ultrasonic cleaning devices comprise a chamber containing a cleaning solution, which may be water or a suitable solvent. The base of the chamber is operable to vibrate at ultrasound frequencies so as to produce pressure waves in the cleaning solution. This produces cavictation bubbles on and around any items placed within the cleaning solution, which act to remove surface dirt or other impurities.

The sealed box contains an oxygen sensor 214, and can be purged with an intert gas so as to reduce the concentration of oxygen or any other reactive gas species that are present in the ambient air to acceptable levels.

The system 200 further comprises a dewer 208, which contains a cryogenic liquid 212, which is liquid argon in the illustrated embodiment. The dewar 208 is a conventional insulated dewar as used for storage of cryogenic liquids. The dewar 208 also contains an amount of metal powder 210 housed inside a non-sealed container 216. The metal powder has been produced using a gas atomisation apparatus 100 as shown in figure 1. As such some of the particles of powder have satellite particles stuck to their surface, and it is desirable to remove these particles to improve the quality of the powder 210. The powder 210 is submerged in the liquid argon 212, which surrounds and fills the non-sealed container 216. In the illustrated embodiment, the powder is titanium powder, although it will be understood that the present invention is also applicable to other metal and non-metal powders.

In the illustrated embodiment, the chamber of the ultrasonic cleaning device 204 is filled with water 206, which acts as a couplant between the chamber of the ultrasonic cleaning device 204 and the dewar 208. Accordingly, the vibrations generated by the chamber of the ultrasonic cleaning device 204 are transmitted to the dewar 208, and on to the powder 210, via the liquid argon 212. The present inventors have recognised that liquid argon and other cryogenic liquids can effectively transmit ultrasound pressure waves to powders submerged therein, and that such ultrasound waves can effectively remove satellite particles of powder that are stuck to other particles. Accordingly, ultrasonic cleaning in a system 200 as shown in figure 2 provides an effective method of processing a powder 210 to dissociate stuck together particles of powder, thereby improving the quality of the powder. The powder may be subsequently subjected to further processing, for example to separate the powder based on the sizes of the particles. As discussed above, to provide optimal results in additive manufacturing processes, it is generally desirable that the particles of a powder fall within as narrow a range of diameters as possible, and that the shape of the particles is as close to spherical as possible.

It will be understood that the use of generally water-based cleaning solutions has hitherto rendered ultrasonic cleaning impractical for cleaning of certain metal powders, because contact with water can cause reactions that alter the chemical composition of the powder, and because complete drying of the powder can be challenging. The present invention obviates these disadvantages, because a cryogenic liquid can generally be selected that is non-reactive with the powder. For example, in the above-described embodiment, the liquid argon has a very low reactivity with the titanium powder. Furthermore, the very low temperature of the cryogenic liquid (an therefore the powder submerged therein) reduces the propensity of the powder to react with any impurities that may come into contact with the powder.

In an alternative embodiment, not shown in the drawings, the dewar 208 may be modified to include inlet and outlet pipe connections, and the liquid argon may be continuously or occasionally recirculated. This may help to ensure that the liquid argon is maintained below its boiling temperature, as the fresh argon may have a temperature well below the boiling temperature. It will be understood that it is undesirable for the liquid argon to boil, because this would cause agitation of the powder, potentially removing it from the container 216.

Alternative approaches for preventing boiling of the liquid argon include increasing the pressure inside the sealed box 202, or providing a cooling jacket comprising a cryogen having a temperature below the boiling point of liquid argon around the dewar 208. The boling point of nitrogen is approximately 10K below that of argon, so liquid nitrogen would be suitable for use in such a cooling jacket.

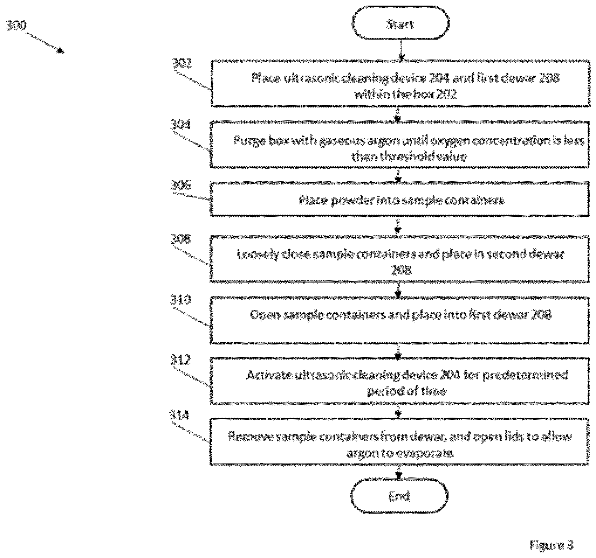

A more detailed method 300 for processing a powder to dissociate stuck-together particles of powder will now be set out, with reference to the flow chart shown in figure 3.

The method 300 begins at step 302, in which the ultrasonic cleaning device 204 is placed within the box 202, and two dewars 208 are filled with liquid argon. A first one of the dewars 208 is placed in the ultrasonic cleaning device 204, and a second dewar is located outside the box 202.

The box 202 is then purged with gaseous argon in step 304. This purging continues until the oxygen concentration as measured by the oxygen sensor 214 is less than a threshold value. The threshold value may be approximately 4%, but is preferably 1% or lower. Purging with argon ensures that gas species that would react with the powder are only present in acceptably low concentrations. It should be noted that the acceptable concentrations of reactive gas species may be somewhat higher than would be the case if the process was to take place at or near room temperature, because the reacvitivty of the powder is much lower at the temperature of liquid argon.

The powder is then placed into one or more sample containers in step 306. The sample containers are loosely closed and placed into the second dewar to cool down, in step 308. This causes the liquid argon in the second dewar to boil. Once boiling of the liquid argon in the second dewar is no longer observed, the powder and sample containers are considered to be sufficiently cool.

The method then proceeds to step 310, in which the lids of the sample containers are unfastened, and the containers are placed into the first dewar. It is important to cool the powder and sample containers before placing the open containers into the liquid argon, because the liquid argon boils vigourously when the containers are first placed into it, and this would cause a large proportion of the powder to be removed from the container if it was to be done with the container open.

Once any slight boiling of the liquid argon that may take place after the containers of powder are placed into the first deware has subsided, the method procees to step 312. In step 312, the ultrasonic cleaning device is activated for a predetermined period of time. The predetermined period of time may be between 5 minutes and 1 hour, but is preferably between 10 and 30 minutes. As will be well understood by the skilled person, the length of time for which the ultrasonic cleaning must be performed will depend upon the extend of the "satteliting" observed in the powder, and on the power of the ultrasonic cleaning device 204. In the illustrated embodiment, the ultrasonic cleaning device has a power output of 500W and an ultrasonic frequency of 40kHz. However, it will be understood that other power outputs and frequencies are also useful. The required processing time to produce the required powder quality for a given initial powder and a given ultrasonic cleaning device can generally be determined empirically.

After the ultrasonic cleaning has been performed for the predetermined time, the method proceeds to step 314, in which the sample containers are removed from the dewar, and the lids of the sample containers are loosely closed, so as to allow the liquid argon in the container to fully evaporate. The sample containers are kept inside the sealed box 202 during the evaporation process. Once the liquid argon is fully evaporated, the lids of the containers are tightly closed so as to prevent ingress of any reactive gas species after the containers are removed from the controlled atmosphere inside the box 202. The method the ends at step 316.

Although the above-described embodiments relate to titanium powder submerged in liquid argon, it will be understood that the process is equally suitable for powders of other metals, including but not limited to iron, titanium, nickel, magnesium, aluminium,copper, tungsten, molybdenum, silver, niobium, tantalum, or alloys comprising one or more of these metals. The method is also suitable for processing non-metal powders.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Refernce signs

- 100: System for gas atomisation of metal
- 102: Nozzle
- 104: Gas jet
- 106: Stream of molten metal
- 108: Stream of metal droplets
- 110: Container
- 200: System for processing powders
- 202: Sealed box
- 204: Ultrasonic cleaning device
- 206: Water
- 208: Dewar
- 210: Powder
- 212: Liquid Cryogen
- 214: Oxygen Sensor
- 216: Non-sealed container

## Claims

1. A method of processing a powder (210) to dissociate stuck-together particles of powder, the method comprising:
submerging the powder in a cryogenic liquid (212); and
transmitting ultrasound to the powder via the cryogenic liquid, thereby dissociating at least some of the stuck-together particles.

2. The method of claim 1, wherein the powder (210) is a metal powder.

3. The method of claim 1 or claim 2, wherein the method further comprises the steps of:
- placing the metal powder into a container (216);
- submerging the container in the liquid cryogen within an ultrasonic cleaning device (204);
- Running the ultrasonic device to transmit ultrasound to the powder.

4. The method of any preceding claim, wherein the method takes place within a sealed box (202), wherein the method further comprises the step of purging the sealed box with an inert gas.

5. The method of claim 4, wherein the inert gas is argon.

6. The method of any preceding claim wherein the cryogenic liquid (212) is liquid argon.

7. The method of any preceding claim, wherein said metal powder (210) is any one of iron, titanium, nickel, magnesium, aluminium,copper, tungsten, molybdenum, silver, niobium, tantalum, or alloys thereof.

8. The method of any preceding claim, wherein the cryogenic liquid (212) is maintained at approximately 10 K below its boiling temperature.

9. The method of any preceding claim, further comprising the step of controlling an oxygen level in the ultrasonic device.

10. The method of claim 8, wherein the oxygen level is less than 4%.

11. The method of any preceding claim, wherein the step of removing the cryogenic liquid comprises evaporation at room temperature.
